# EUROPEAN PATENT SPECIFICATION

(11) **EP 3 620 316 B1**
(45) Date of publication and mention of the grant of the patent: **30.12.2020**
(21) Application number: 18195852.1
(22) Date of filing: 21.09.2018
(51) Int. Cl.: B60H 1/00

(54) **SYSTEM AND METHOD FOR REGULATING THE TEMPERATURE OF AT LEAST ONE ENERGY SOURCE AND/OR AN INDOOR SPACE OF A VEHICLE**
SYSTEM UND VERFAHREN ZUR REGULIERUNG DER TEMPERATUR VON MINDESTENS EINER ENERGIEQUELLE UND/ODER EINES INNENRAUMS EINES FAHRZEUGS
SYSTÈME ET PROCÉDÉ POUR RÉGULER LA TEMPÉRATURE D'AU MOINS UNE SOURCE D'ÉNERGIE ET/OU D'UN ESPACE INTÉRIEUR D'UN VÉHICULE

(30) Priority: 10.09.2018 EP 18193492
(43) Date of publication of application: 11.03.2020
(73) Proprietor: Aircontech GmbH, 6800 Feldkirch (AT)
(72) Inventor: Starz, Arno, 6833 Klaus (AT)
(74) Representative: Vossius & Partner Patentanwälte Rechtsanwälte mbB

(56) References cited:
- CN-U- 202 835 672
- DE-A1-102013 223 526
- FR-A1- 2 984 017
- GB-A- 2 558 914

## Description

The present invention is related to an air conditioning system and method for regulating the temperature of at least one energy source and/or an indoor space of a vehicle.

The prior art usually provides two separate conditioning systems, i.e. one for the indoor space and one for the energy source, e.g. the battery. In particular, the prior art conditioning systems comprise a refrigerant compressor and a condenser and two evaporator that are arranged in parallel so that one evaporator is used to provide cooling to the indoor space and the other evaporator provides cooling for the battery. To heat the battery the prior art provides an additional fluid heating system for the battery.

That is, most prior art systems use a system with a compressor, a condenser and a HVAC (Heating, ventilation, and air conditioning)-evaporator for conditioning the indoor space of a vehicle and a second evaporator that is arranged parallel for conditioning the battery.

In order to condition the battery, the prior art systems employ additional systems. For example, some prior art systems employ a "Peltier"-based battery cooler. However, the energy efficiency of such systems is not very good.

Other systems employ a low-temperature loop or refrigerant loop comprising a heat sink and a chiller to cool the battery. In addition, these systems comprise an additional heater using heated water to heat the battery. However, such systems are very complicated and costly due to the high amount of parts and complex piping needed for these systems.

Another prior art system employs an active air cooled battery system comprising an evaporator and a blower or a direct system comprising a refrigerant loop having a battery evaporator. Such systems suffer, for example, from an increased fire hazard due to the authorized refrigerants and the necessary oil in the refrigerant loop.

In summary, the prior art provides different conditioning systems for conditioning the indoor space and for conditioning the battery. Thus, the overall system is very complicated and comprises a lot of components for additionally conditioning the battery.

A prior art system is known from FR2984017A, it discloses an evaporator arranged downstream of the fan for cooling the air flow, a first heating element arranged downstream of the evaporator for heating the air flow and a heat exchanger arranged downstream of the evaporator for heat exchange with the air flow and in fluid communication with a battery.

As apparent from the above discussion, it is an object of the present invention to increase the efficiency of the prior art air conditioning systems. The object is achieved by the features of the independent claims. Dependent claims relate to further aspects of the present invention.

According to the present invention there is provided an air conditioning system for regulating the temperature of at least one energy source and/or an indoor space of a vehicle. The system comprises: a fan for creating an air flow; an evaporator arranged downstream of the fan for cooling the air flow; a first heating element arranged downstream of the evaporator for heating the air flow; a heat exchanger arranged downstream of the evaporator for heat exchange with the air flow and in fluid communication with the at least one energy source for heating or cooling the at least one energy source; and a second heating element arranged downstream of the evaporator for heating the air flow. The system is configured to selectively direct the heated or cooled air flow to the indoor space of the vehicle or prevent the heated or cooled air flow from reaching the indoor space of the vehicle.

That is, the heat exchanger may be adapted to heat or cool the at least one energy source by the fluid, e.g. liquid coolant, flowing from the heat exchanger to the at least one energy source, wherein the fluid may be heated or cooled by the air flow passing the heat exchanger via heat exchange.

In addition, the heat exchanger may be configured to use the heat produced by the at least one energy source to heat the air flow by heat exchange between the fluid flowing from the at least one energy source to the heat exchanger and the air flow.

The fluid may be a fluid for thermal energy transport, also called a liquid coolant in the following.

The air conditioning system may not make use of a chiller.

The air conditioning system for regulating the temperature of at least one energy source and/or an indoor space of a vehicle may consists of: a fan for creating an air flow; an evaporator arranged downstream of the fan for cooling the air flow; a first heating element arranged downstream of the evaporator for heating the air flow; a heat exchanger arranged downstream of the evaporator for heat exchange with the air flow and in fluid communication with the at least one energy source for heating or cooling the at least one energy source; and a second heating element arranged downstream of the evaporator for heating the air flow. The system is configured to selectively direct the heated or cooled air flow to the indoor space of the vehicle or prevent the heated or cooled air flow from reaching the indoor space of the vehicle.

The term "downstream" is used to define the relative location of the various components of the present invention to one another. In particular, term "downstream" in this context may relate to the general direction of air flow as created by the fan.

In other words, the evaporator may be located next to the fan, the first heating element may be located next to the evaporator, the heat exchanger may be located next to the first heating element and the second heating element may be located next to the heat exchanger.

That is, the fan, the evaporator, the first heating element, the heat exchanger and the second heating element are arranged in series one after the other in the direction of the air flow created by the fan. However, this does not exclude other components to be placed in between, as long as the aforementioned sequence of the fan, the evaporator, the first heating element, the heat exchanger and the second heating element is maintained.

However, the relative location of the various components may also be described in alternative ways. For example, in relation to a housing, where the fan, the evaporator, the first heating element, the heat exchanger and the second heating element are located within the housing. In this case, the housing may have a front and a rear side, wherein the front side may be the side that is connected to the indoor space of the vehicle. The fan may then be located at the rear side, the evaporator may be located in front of the fan, the first heating element may be located in front of the evaporator, the heat exchanger may be located in front of the first heating element and the second heating element may be located in front of the heat exchanger. The aforementioned front side of the housing may relate to an exhaust side of the housing that is connected to the indoor space of the vehicle and the rear side of the housing may relate to an air intake side of the housing.

The term "indoor space of a vehicle" refers to the space the driver of the vehicle is located while driving the vehicle. That is, the "indoor space" as referred to in this specification is to be understood as the space of a vehicle a driver and/or passenger may be located in.

The vehicle may be a car, preferably a hybrid car, more preferably an electric car.

The heat exchanger, the first heating element and the second heating element may be provided as separate components and the heat exchanger may be arranged downstream of the first heating element and the second heating element may be arranged downstream of the heat exchanger.

Alternatively, the first heating element and/or the second heating element may be integrated into the heat exchanger.

The air conditioning system may further comprise a fluid connection between the at least one energy source and the heat exchanger, wherein the fluid connection preferably comprises a directional control valve to controllably guide a liquid coolant to the at least one energy source through the heat exchanger or to bypass the heat exchanger, and more preferably wherein the directional control valve is configured to control an amount of liquid to flow through the heat exchanger and an amount of liquid to bypass the heat exchanger.

By way of the directional control valve, the liquid coolant can be either guided through the heat exchanger to the at least one energy source if heating or cooling of the at least one energy source is by way of the heat exchanger is required. Otherwise, if no heating or cooling of the at least one energy source is required by way of the heat exchanger; the directional control valve may be changed to bypass the heat exchanger.

The directional control valve may be configured to mix liquid coolant conditioned by the heat exchanger and liquid coolant bypassing the heat exchanger. That is, the directional control valve may be configured to control the amount of liquid coolant that is conditioned by the heat exchanger and the amount of liquid coolant that bypasses the heat exchanger.

In other words, the controllable three way valve can control the mixture of the fluid flowing through the heat exchanger and the fluid bypassing the heat exchanger. That is, by controlling the amount of fluid to flow through the heat exchanger and the amount of fluid to bypass the heat exchanger, the controllable three way valve can control the temperature of the fluid to condition the at least one energy source.

The fan may be adapted to provide an air flow to the evaporator, the first heating element, the heat exchanger, and the second heating element.

The fan may be configured to control its speed to control the strength of the air flow and thereby control the heating or cooling of the indoor space and/or the at least one energy source.

The housing may comprise an air circulation channel that is configured to guide an air flow created by the fan to the front side (exhaust side) of the housing to the rear side (air intake side) of the housing and back to the fan for creating a circulating air flow.

The air channel may be located next to the fan, the evaporator, the first heating element, the heat exchanger and the second heating element. This way the air flow is guided passed these components while flowing through the air channel.

The air channel may be configured to connect an exhaust side of the system with an air intake side to bypass the fan, the evaporator, the first heating element, the heat exchanger and the second heating element.

The air conditioning system may further comprise at least one outlet to the indoor space of the vehicle. The at least one outlet is preferably adapted to be in an open state for cooling or heating the at least one energy source and the indoor space, and in a close state for cooling or heating of only the at least one energy source.

The outlets may be used to selectively direct the heated or cooled air flow to the indoor space of the vehicle when being in the open state or prevent the heated or cooled air flow from reaching the indoor space of the vehicle when being in the close state.

The at least one outlet may be provided with at last one controllable lid that is adapted to open or close the at least one outlet.

If there is a plurality of outlets provided, a plurality of controllable lids may be provided. That is, there may be a controllable lid for each outlet. It is preferable that the controllable lids are individually controllable, so that the air flow introduced into the indoor space of the vehicle can be efficiently controlled.

The at least one energy source is preferably at least one battery for providing power to the vehicle. However, the at least one energy source may also be an inverter of a power circuit.

According to the present invention there is provided a vehicle comprising an air conditioning system according to the foregoing description, an indoor space and an at least one energy source.

According to the present invention there is provided an air conditioning method for regulating the temperature of at least one energy source and/or an indoor space of a vehicle. The method comprises the steps of: providing a fan for creating an air flow; providing an evaporator arranged downstream of the fan for cooling the air flow; providing a first heating element arranged downstream of the evaporator for heating the air flow; providing a heat exchanger arranged downstream of the evaporator for heat exchange with the air flow and in fluid communication with the at least one energy source for heating or cooling the at least one energy source; providing a second heating element arranged downstream of the evaporator for heating the air flow; and selectively directing the heated or cooled air flow to the indoor space of the vehicle or preventing the heated or cooled air flow from reaching the indoor space of the vehicle.

The air conditioning method may further comprise the step of providing a fluid connection between the at least one energy source and the heat exchanger and preferably providing a directional control valve connected to the heat exchanger and the at least one energy source to controllably guide a liquid coolant to the at least one energy source through the heat exchanger or to bypass the heat exchanger, and more preferably wherein the method further comprises a step of controlling the amount of liquid to flow through the heat exchanger and the amount of fluid to bypass the heat exchanger.

The method may further comprise the step of controlling the mixture of the fluid flowing through the heat exchanger and the fluid bypassing the heat exchanger by the controllable three way valve. That is, by controlling the amount of fluid to flow through the heat exchanger and the amount of fluid to bypass the heat exchanger, the controllable three way valve can control the temperature of the fluid to condition the at least one energy source.

The fan may be adapted to provide an air flow to the evaporator, the first heating element, the heat exchanger, and the second heating element.

The method may comprise a step for controlling the speed of the fan to control the strength of the air flow and thereby control the heating or cooling of the indoor space and/or the at least one energy source.

During a first mode of operation, the method may comprise the step of heating the at least one energy source by providing heat from the first heating element to the heat exchanger.

In other words, during a first mode of operation, the method may comprise the step of heating the at least one energy source by providing heat from the first heating element to the heat exchanger and thereby heating the fluid that flows from the heat exchanger to the at least one energy source.

Thus, during a first mode of operation, the method is configured to heat only the at least one energy source.

During a second mode of operation, the method may comprise the step of cooling the at least one energy source by providing cool air from the evaporator to the heat exchanger.

In other words, during a second mode of operation, the method may comprise the step of cooling the at least one energy source by providing cool air from the evaporator to the heat exchanger and thereby cooling the fluid that flows from the heat exchanger to the at least one energy source.

Thus, during a second mode of operation, the method may be configured to cool only the at least one energy source.

During a third mode of operation, the method may comprise the step of cooling the at least one energy source and the indoor space of the vehicle by providing cool air from the evaporator to the heat exchanger and the indoor space of the vehicle.

In other words, during a third mode of operation, the method may comprise the step of cooling the at least one energy source and the indoor space of the vehicle by providing cool air from the evaporator to the indoor space of the vehicle and the heat exchanger and thereby cooling the fluid that flows from the heat exchanger to the at least one energy source.

Thus, during a third mode of operation, the method may be configured to cool the at least one energy source and the indoor space.

During a fourth mode of operation, the method may comprise the steps of: heating the indoor space of the vehicle by providing heat from the heat exchanger to the indoor space of the vehicle and by providing heat from the second heating element to the indoor space of the vehicle; and cooling the at least one energy source by providing cool air from the evaporator to the heat exchanger.

In other words, during a third mode of operation, the method may comprise the steps of: heating the indoor space of the vehicle by providing heat from the heat exchanger to the indoor space of the vehicle and by providing heat from the second heating element to the indoor space of the vehicle; and cooling the at least one energy source by providing cool air from the evaporator to the heat exchanger and thereby cooling the fluid that flows from the heat exchanger to the at least one energy source.

Thus, during a fourth mode of operation, the method may be configured to cool the at least one energy source and to heat the indoor space, wherein the heat from for heating the indoor space is obtained by the heat exchanger and the second heating element.

In other words, during a fourth mode of operation, the method may be configured to provide cool air from the evaporator to the heat exchanger, which performs heat exchange with the fluid to cool the at least one energy source. Thereby the air flow passing the evaporator can be heated and further reach the second heating element, which may further heat the air flow, which is then directed to the indoor space.

The air conditioning method may further comprise the step of closing at least one outlet to the indoor space of the vehicle during the first mode of operation and/or the second mode of operation to prevent heating and cooling of the indoor space, respectively.

The air conditioning method may further comprise the step of opening at least one outlet to the indoor space of the vehicle during the third mode of operation and/or the fourth mode of operation to allow cooling and heating of the indoor space, respectively.

That is, the outlets may be used to selectively directing the heated or cooled air flow to the indoor space of the vehicle when being in the opened or preventing the heated or cooled air flow from reaching the indoor space of the vehicle when being in the closed.

As apparent from the above description of the present invention it is clear that the amount of components can be reduced compared to prior art systems and fabrication costs can be reduced.

In addition, the heat generated from the battery can be used to heat the indoor space as described above. That is, when the battery is cooled by way of the heat exchanger, the heat extracted from the fluid by the heat exchanger can be used to heat the indoor space. Thus, the second heater does not have to produce as much heat as it would have to when using a prior art system, i.e. without the heat exchanger arranged in front of the second heater and using the heat extracted from the fluid that cools the battery for heating the indoor space.

Although four modes of operation have been described above, more modes of operation may be possible with the system and the method of the present invention. For example, the outlets may be opened in the first mode of operation to allow heated air to flow into the indoor space and thereby heating both the energy source and the indoor space.

In addition, the second heating element may be providing heat during the first mode of operation. Thus, further heating the air flow that may be circulated within the housing, e.g. by way of the air circulation channel. At the same time, the outlets may be opened during the first mode of operation to additionally heat the indoor space.

Moreover, the first and the second heating elements may be used to heat the indoor space and/or the energy source. The exact mode of operation and the components involved merely depends on the specific requirements of the indoor space and/or the energy source, and thus, can be controlled individually as required.

That is, according to the present invention, the necessary heating power for the indoor space can be reduced and the necessary cooling power for the battery can be reduced at the same time by using the heat exchanger.

Therefore, the emission and the energy consumption can be reduced.

### BRIEF DESCRIPTION OF THE DRAWINGS

The present invention is further described with respect to exemplary embodiments by referring to the Figures, where
Fig. 1 illustrates a system according to an exemplary embodiment of the present invention, and
Figs. 2a-d illustrate different operational states according to the exemplary embodiment of the present invention.

### DETAILED DESCRIPTION OF PREFERRED EMBODIMENTS

Some preferred embodiments are now described with reference to the drawings. For explanation purpose, various specific details are set forth, without departing from the scope of the present invention as claimed.

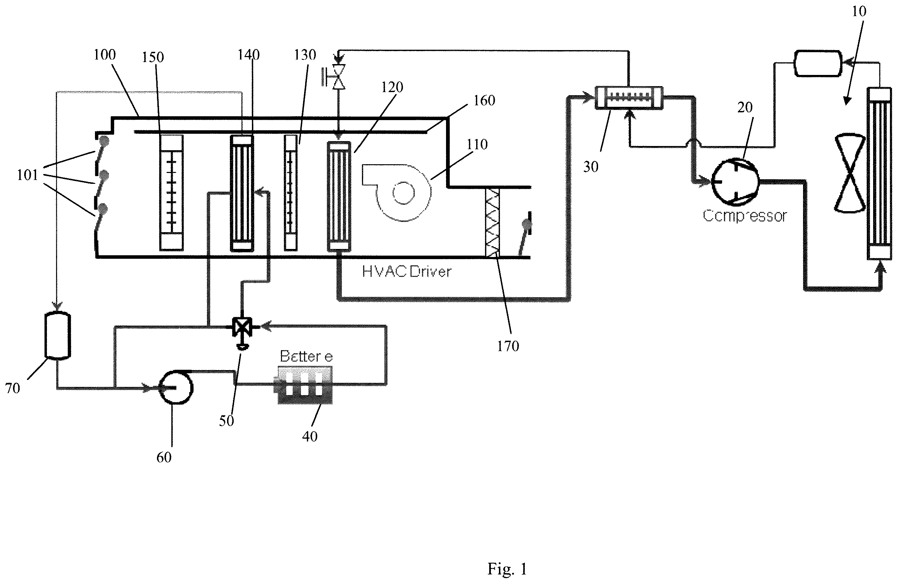

Fig. 1 shows a system according to an exemplary embodiment with a first coolant circulation system comprising a first unit 10 having a condenser, an exhauster and a drying unit. The first coolant circulation system further comprises a compressor 20 and a heat exchanger 30. The first coolant circulation system further comprises an evaporator 120 with an expansion valve that controls the amount of refrigerant (liquid coolant) released into the evaporator. The first coolant circulation system is a standard coolant circulation system known in the art. Thus, a detailed description of the function of the coolant circulation system is omitted here. The purpose of the coolant circulation system is, however, to provide coolant to the evaporator 120, which is configured to provide a cool air flow, if needed. The function of the evaporator 120 is described in more detail below.

Fig. 1 further shows a battery 40, a controllable three way valve 50, a water circulation pump 60, and a compensating reservoir for battery fluid 70 which form a second coolant circulation system together with a heat exchanger 140.

The battery 40 is connected to an inlet of the controllable three way valve 50. A first outlet of the controllable three way valve 50 is connected to the heat exchanger 140 and a second outlet of the controllable three way valve 50 is connected to an inlet of the water circulation pump 60 and an outlet of the compensating reservoir for battery fluid 70, i.e. between the inlet of the water circulation pump 60 and the outlet of the compensating reservoir for battery fluid 70.

The heat exchanger 140 is located in between the first outlet and the second outlet of the controllable three way valve 50. Thus, the controllable three way valve 50 is able to feed fluid to the heat exchanger 140 or to bypass the heat exchanger 140. The controllable three way valve 50 may control the mixing of fluid that flows through the heat exchanger 140 and the fluid that bypasses the heat exchanger 140.

The outlet of the compensating reservoir for battery fluid 70 is connected to the inlet of the water circulation pump 60 and the outlet of the water circulation pump 60 is connected to the battery 40. In addition, the inlet of the compensating reservoir for battery fluid 70 is connected to the heat exchanger 140.

The above configuration allows fluid to flow from the heat exchanger 140 to the compensating reservoir for battery fluid 70 and from there to the water circulation pump 60. The fluid is further provided from the water circulation pump 60 to the battery 40, where it may condition the battery 40. If this conditioning of the battery 40 is sufficient, the controllable three way valve 50 may accept the fluid from the battery 40 at its inlet and guides the fluid out through the second outlet, thereby bypassing the heat exchanger 140. The fluid exits through the second outlet of the controllable three way valve 50 and is mixed with fluid coming from the compensating reservoir for battery fluid 70 to re-enter the water circulation pump 60 and again condition the battery 40.

If the above mentioned conditioning of the battery 40 by the foregoing circulation is not sufficient, the controllable three way valve 50 may accept the fluid from the battery 40 at its inlet and guides the fluid out through the first outlet, where the fluid can flow to the heat exchanger 140. The fluid is thus conditioned (heated or cooled) by the heat exchanger 140, where the (heated or cooled) fluid can flow out to mixed with fluid coming from the compensating reservoir for battery fluid 70 to re-enter the water circulation pump 60 and again condition the battery 40.

Fig. 1 further shows a housing 100 with three outlets 101, wherein the outlets are each provided with a lid, wherein the outlets 101 can be opened and closed by controlling the lids.

The outlets 101 separate the housing 100 and the indoor space of the vehicle (not shown), i.e. the space where the driver and/or any passengers may be in while driving. In other words, the outlets 101 provide air to the indoor space when the lids are in an open state and do not provide air to the indoor space when the lids are in a closed state.

The outlets 101 or rather the lids may be individually controlled to provide air to individual regions of the indoor space of the vehicle, e.g. the head region of a driver and/or passenger, the leg or foot region of a driver and/or passenger, a window region of the vehicle etc.

The lids may also be called flaps and can be motor-driven or mechanically controlled, i.e. opened and closed.

Within the housing 100, there is located: a fan 110 for creating an air flow inside the housing, the evaporator 120 arranged downstream of the fan 110, a first heating element 130 arranged downstream of the evaporator 120 and the heat exchanger 140 arranged downstream of the first heating element 130.

Moreover, the housing 100 comprises a filter 170 through which outside air or re-circulating air, i.e. air that is circulated within the vehicle, is filtered and sucked in by the fan 110 to cerate the air flow. This side of the housing 100 may also be called air intake side.

The housing 100 further comprises an air circulation channel 160. The air circulation channel 160 is located next to the fan 110, the evaporator 120, the first heating element 130 and the heat exchanger 140. This way air can circulate through the fan 110, the evaporator 120, the first heating element 130, the heat exchanger 140 and back to the fan without flowing through the evaporator 120, the first heating element 130 and the heat exchanger 140 on its way back to the fan 110. Thus, the air can be circulated within the housing 100 as long as the outlets 101 of the housing are closed.

In other words, the air circulation channel 160 guides the air flow from the outlet 101 side of the housing 100 to the air intake side of the housing 100 by bypassing the above mentioned components.

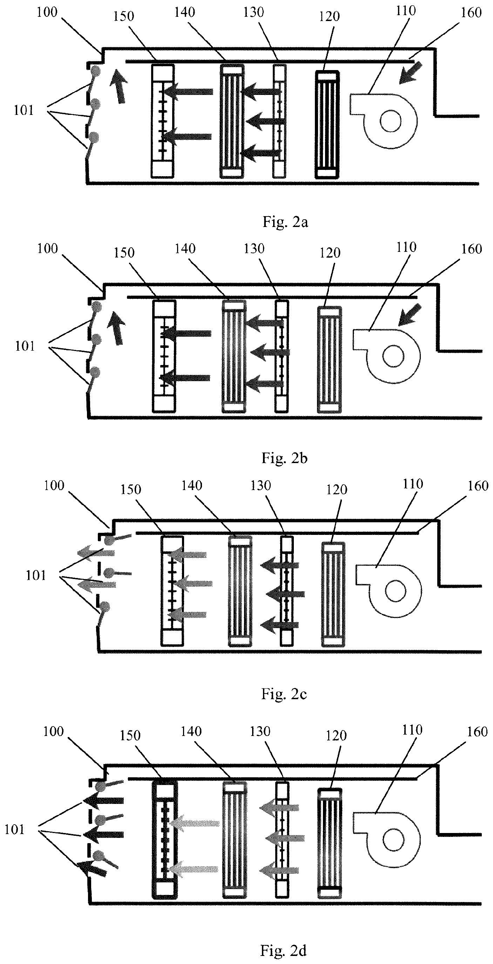

Some different modes of operation of the embodiment outlined above will now be described with reference to Figs. 2a-2d.

Fig. 2a shows a first mode of operation. This first mode of operation is a mode where only the battery 40 is heated.

Therefore, fan 110 is in an ON-state, where it produces an air flow to the components downstream of it. The evaporator 120 is in an OFF-state, where it does not cool the air flow. The first heating element 130 is in an ON-state, where it produces heat and thus heats the air flow. The heat exchanger 140 is heated by the heated air flow. The controllable three way valve 50 is in a state to allow the fluid to flow through the heat exchanger 140. Thereby, the fluid is heated by the heat exchanger 140 and subsequently provided to the battery 40 to heat the battery 40. The second heating element 150 is in an OFF-state, where it does not produce heat and thus does not further heat the air flow.

The controllable three way valve 50 can control the mixture of the fluid flowing through the heat exchanger 140 and the fluid bypassing the heat exchanger 140. That is, by controlling the amount of fluid to flow through the heat exchanger 140 and the amount of fluid to bypass the heat exchanger 140, the controllable three way valve 50 can control the temperature of the fluid to condition the energy source.

In the second mode of operation, the outlets 101 are closed, so that no airflow is directed to the indoor space. Thus, the air flow is circulated through the fan 110, the evaporator 120, the first heating element 130, the heat exchanger 140 and the air circulation channel 160 back to the fan 110 as indicated by the arrows in Fig. 2a.

The first mode of operation may be used to prepare the battery 40 for a charging operation.

Fig. 2b shows a second mode of operation. This second mode of operation is a mode where only the battery 40 is cooled.

Therefore, fan 110 is in an ON-state, where it produces an air flow to the components downstream of it. The evaporator 120 is in an ON-state, where it cools the air flow. The first heating element 130 is in an OFF-state, where it does not produce heat and thus does not heat the air flow. The heat exchanger 140 is cooled by the cooled air flow. The controllable three way valve 50 is in a state to allow the fluid to flow through the heat exchanger 140. Thereby, the fluid is cooled by the heat exchanger 140 and subsequently provided to the battery 40 to cool the battery 40. The second heating element 150 is in an OFF-state, where it does not produce heat and thus does not heat the air flow.

In the second mode of operation, the outlets 101 are closed, so that no air flow is directed to the indoor space. Thus, the air flow is circulated through the fan 110, the evaporator 120, the first heating element 130, the heat exchanger 140 and the air circulation channel 160 back to the fan 110 as indicated by the arrows in Fig. 2b.

The second mode of operation may be used while the battery 40 is charging.

Fig. 2c shows a third mode of operation. This third mode of operation is a mode where the battery 40 and the indoor space are cooled at the same time.

The states of the different components are equivalent to the states described in the second mode of operation. Therefore, repeating the description is omitted at this point. The only difference of the third mode of operation to the second mode of operation is that the outlets 101 are opened, so that the cooled air flow is directed to the indoor space. Thus, the air flow is able to also cool the indoor space as indicated by the arrows in Fig. 2c. In addition, the air flow provides a cooling to the battery 40 the same way as described in connection with the second mode of operation.

In Fig. 2c only two outlets 101 are opened, however, there is no restriction on the number of outlets 101 that can be opened in the third mode of operation.

The third mode of operation may be used while the battery 40 is charging and at the same time a cooling of the indoor space is required.

Fig. 2d shows a fourth mode of operation. This fourth mode of operation is a mode where the battery 40 is cooled and the indoor space is heated at the same time.

Therefore, fan 110 is in an ON-state, where it produces an air flow to the components downstream of it. The evaporator 120 is in an ON-state, where it cools the air flow. The first heating element 130 is in an OFF-state, where it does not produce heat and thus does not heat the air flow. The heat exchanger 140 is cooled by the heated air flow. The controllable three way valve 50 is in a state to allow the fluid to flow through the heat exchanger 140. Thereby, the fluid is cooled by the heat exchanger 140 and subsequently provided to the battery 40 to cool the battery 40. The second heating element 150 is in an ON-state, where it produces heat and thus further heats the air flow.

In the fourth mode of operation, the outlets 101 are opened, so that the heated air flow is directed to the indoor space. Thus, the air flow is able to heat the indoor space as indicated by the arrows in Fig. 2d. In addition, the air flow provides a cooling to the battery 40.

The fourth mode of operation may be used while the battery 40 is charging and at the same time heating of the indoor space is required.

Although four modes of operation have been described with reference to Figs. 2a-2d, more modes of operation may be possible with the system and the method of the present invention. For example, the outlets 101 may be opened in the first mode of operation to allow heated air to flow into the indoor space and thereby heating both the energy source and the indoor space.

In addition, the second heating element 150 may be in an ON-state during the first mode of operation. Thus, further heating the air flow that may be circulated within the housing, e.g. by way of the air circulation channel 160. At the same time, the outlets 101 may be opened during the first mode of operation to additionally heat the indoor space.

Moreover, the first and the second heating elements (130, 150) may be used to heat the indoor space and/or the energy source. It merely depends on the specific requirements of the indoor space and/or the energy source.

Although the present invention has been described based on exemplary embodiments, this should not in any way restrict the scope of the invention. It will be understood by a person skilled in the art, that various modification to the exemplary embodiments are possible without departing from the scope of the present invention as defined by the claims.

In addition, it is clear for a skilled person that certain features only described with reference to one specific embodiment may be combined with other features of another embodiment.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively.

## Claims

1. An air conditioning system for regulating the temperature of at least one energy source (40) and/or an indoor space of a vehicle, wherein the system comprises:
a fan (110) for creating an air flow;
an evaporator (120) arranged downstream of the fan (110) for cooling the air flow;
a first heating element (130) arranged downstream of the evaporator (120) for heating the air flow;
a heat exchanger (140) arranged downstream of the evaporator (120) for heat exchange with the air flow and in fluid communication with the at least one energy source (40) for heating or cooling the at least one energy source (40); **characterized in that** the system comprises
a second heating element (150) arranged downstream of the evaporator 120 for heating the air flow,
and **in that** the system is configured to selectively direct the heated or cooled air flow to the indoor space of the vehicle or prevent the heated or cooled air flow from reaching the indoor space of the vehicle.

2. The air conditioning system of claim 1, wherein the heat exchanger (140), the first heating element (130) and the second heating element (150) are provided as separate components and wherein the heat exchanger (140) is arranged downstream of the first heating element (130) and the second heating element (150) is arranged downstream of the heat exchanger (140) or
wherein the first heating element (130) and/or the second heating element (150) are integrated into the heat exchanger (140).

3. The air conditioning system of claim 1 or 2, further comprising a fluid connection between the at least one energy source (40) and the heat exchanger (140), wherein the fluid connection preferably comprises a directional control valve (50) to controllably guide a liquid to the at least one energy source (40) through the heat exchanger (140) or to bypass the heat exchanger (140), and more preferably wherein the directional control valve (50) is configured to control an amount of liquid to flow through the heat exchanger (140) and an amount of liquid to bypass the heat exchanger (140).

4. The air conditioning system of any of claims 1 to 3, further comprising at least one outlet (101) to the indoor space of the vehicle, wherein the at least one outlet (101) is adapted to be
in an open state for cooling or heating the at least one energy source (40) and the indoor space, and
in a close state for cooling or heating of only the at least one energy source (40).

5. The air conditioning system of any of claims 1 to 4, wherein the at least one energy source (40) is a battery for providing power to the vehicle.

6. A vehicle comprising an air conditioning system according to any one of claims 1 to 5, an indoor space and at least one energy source (40).

7. An air conditioning method for regulating the temperature of at least one energy source (40) and/or an indoor space of a vehicle, wherein the method comprises the steps of:
providing a fan (110) for creating an air flow;
providing an evaporator (120) arranged downstream of the fan (110) for cooling the air flow;
providing a first heating element (130) arranged downstream of the evaporator (120) for heating the air flow;
providing a heat exchanger (140) arranged downstream of the evaporator (120) (130) for heat exchange with the air flow and in communication with the at least one energy source (40) for heating or cooling the at least one energy source (40);
**characterized by**
providing a second heating element (150) arranged downstream of the evaporator (120) for heating the air flow; and
selectively directing the heated or cooled air flow to the indoor space of the vehicle or preventing the heated or cooled air flow from reaching the indoor space of the vehicle.

8. The air conditioning method of claim 7, wherein the heat exchanger (140), the first heating element (130) and the second heating element (150) are provided as separate components and wherein the method comprises the steps of arranging the heat exchanger (140) downstream of the first heating element (130) and arranging the second heating element (150) downstream of the heat exchanger (140) or
wherein the method comprises providing the first heating element (130) and/or the second heating element (150) to be integrated into the heat exchanger (140).

9. The air conditioning method of claim 7 or 8, further comprising the step of providing a fluid connection between the at least one energy source (40) and the heat exchanger (140) and preferably providing a directional control valve (50) connected to the heat exchanger (140) and the at least one energy source (40) to controllably guide a liquid to the at least one energy source (40) through the heat exchanger (140) or to bypass the heat exchanger (140), and more preferably wherein the method further comprises a step of controlling the amount of liquid to flow through the heat exchanger and the amount of fluid to bypass the heat exchanger.

10. The air conditioning method of any one of claims 7 to 9, wherein during a first mode of operation, the method comprises the step of heating the at least one energy source (40) by providing heat from the first heating element (130) to the heat exchanger (140).

11. The air conditioning method of any of claims 7 to 10, wherein during a second mode of operation, the method comprises the step of cooling the at least one energy source (40) by providing cool air from the evaporator (120) to the heat exchanger (140).

12. The air conditioning method of any of claims 7 to 11, wherein during a third mode of operation, the method comprises the step of cooling the at least one energy source (40) and the indoor space of the vehicle by providing cool air from the evaporator (120) to the heat exchanger (140) and the indoor space of the vehicle.

13. The air conditioning method of any of claims 7 to 12, wherein during a fourth mode of operation, the method comprises the steps of:
heating the indoor space of the vehicle by providing heat from the second heating element (150) to the indoor space of the vehicle;
cooling the at least one energy source (40) by providing cool air from the evaporator (120) to the heat exchanger (140); and
heating the indoor space of the vehicle by providing heat from the heat exchanger (140) to the indoor space of the vehicle.

14. The air conditioning method of claim 10 or 11, further comprising the step of closing at least one outlet (101) to the indoor space of the vehicle during the first mode of operation and/or the second mode of operation to prevent heating and cooling of the indoor space, respectively.

15. The air conditioning method of claim 12 or 13, further comprising the step of opening at least one outlet (101) to the indoor space of the vehicle during the third mode of operation and/or the fourth mode of operation to allow cooling and heating of the indoor space, respectively.

## Patentansprüche

1. Klimatisierungssystem zur Regulierung der Temperatur von mindestens einer Energiequelle (40) und/oder eines Innenraums eines Fahrzeugs, wobei das System aufweist:
einen Ventilator (110) zum Erzeugen eines Luftstroms;
einen Verdampfer (120), der zum Kühlen des Luftstroms stromabwärts vom Ventilator (110) angeordnet ist;
eine erstes Heizelement (130), das zum Erwärmen des Luftstroms stromabwärts vom Verdampfer (120) angeordnet ist;
einen Wärmetauscher (140), der zum Wärmeaustausch mit dem Luftstrom stromabwärts vom Verdampfer (120) und zum Erwärmen oder Kühlen der mindestens einen Energiequelle (40) in Fluidverbindung mit der mindestens einen Energiequelle (40) angeordnet ist;
**dadurch gekennzeichnet, dass** das System aufweist:
ein zweites Heizelement (150), das zum Erwärmen des Luftstroms stromabwärts vom Verdampfer (120) angeordnet ist,
und dass das System konfiguriert ist, selektiv den erwärmten oder gekühlten Luftstrom zum Innenraum des Fahrzeugs zu leiten oder zu verhindern, dass der erwärmte oder gekühlte Luftstrom den Innenraum des Fahrzeugs erreicht.

2. Klimatisierungssystem nach Anspruch 1, wobei der Wärmetauscher (140), das erste Heizelement (130) und das zweite Heizelement (150) als separate Komponenten vorgesehen sind und wobei der Wärmetauscher (140) stromabwärts vom ersten Heizelement (130) angeordnet ist und das zweite Heizelement (150) stromabwärts vom Wärmetauscher (140) angeordnet ist, oder
wobei das erste Heizelement (130) und/oder das zweite Heizelement (150) in den Wärmetauscher (140) integriert sind.

3. Klimatisierungssystem nach Anspruch 1 oder 2, das ferner eine Fluidverbindung zwischen der mindestens einen Energiequelle (40) und dem Wärmetauscher (140) aufweist, wobei die Fluidverbindung vorzugsweise ein Wegeventil (50) aufweist, um steuerbar durch den Wärmetauscher (140) eine Flüssigkeit zu der mindestens einen Energiequelle (40) zu leiten oder um den Wärmetauscher (140) zu umgehen, und wobei besonders bevorzugt das Wegeventil (50) konfiguriert ist, eine Flüssigkeitsmenge, die durch den Wärmetauscher (140) fließen soll, und eine Flüssigkeitsmenge zu steuern, die den Wärmetauscher (140) umgehen soll.

4. Klimatisierungssystem nach einem der Ansprüche 1 bis 3, das ferner mindestens einen Auslass (101) zum Innenraum des Fahrzeugs aufweist, wobei der mindestens eine Auslass (101) eingerichtet ist:
sich zum Kühlen oder Erwärmen der mindestens einen Energiequelle (40) und des Innenraums in einem offenen Zustand zu befinden, und
sich zum Kühlen oder Erwärmen nur der mindestens einen Energiequelle (40) in einem geschlossenen Zustand zu befinden.

5. Klimatisierungssystem nach einem der Ansprüche 1 bis 4, wobei die mindestens eine Energiequelle (40) eine Batterie zum Liefern von Strom an das Fahrzeug ist.

6. Fahrzeug, das ein Klimatisierungssystem nach einem der Ansprüche 1 bis 5, einen Innenraum und mindestens eine Energiequelle (40) aufweist.

7. Klimatisierungsverfahren zur Regulierung der Temperatur von mindestens einer Energiequelle (40) und/oder eines Innenraums eines Fahrzeugs, wobei das Verfahren die Schritte aufweist:
Bereitstellen eines Ventilators (110) zum Erzeugen eines Luftstroms;
Bereitstellen eines Verdampfers (120), der zum Kühlen des Luftstroms stromabwärts vom Ventilator (110) angeordnet ist;
Bereitstellen eines ersten Heizelements (130), das zum Erwärmen des Luftstroms stromabwärts vom Verdampfer (120) angeordnet ist;
Bereitstellen eines Wärmetauschers (140), der zum Wärmeaustausch mit dem Luftstrom stromabwärts vom Verdampfer (120) angeordnet ist und der mit der mindestens einen Energiequelle (40) zum Erwärmen oder Kühlen der mindestens einen Energiequelle (40) in Verbindung steht;
**gekennzeichnet durch**
Bereitstellen eines zweiten Heizelements (150), das zum Erwärmen des Luftstroms stromabwärts vom Verdampfer (120) angeordnet ist; und
selektives Leiten des erwärmten oder gekühlten Luftstroms zum Innenraum des Fahrzeugs oder Verhindern, dass der erwärmte oder gekühlte Luftstrom den Innenraum des Fahrzeugs erreicht.

8. Klimatisierungsverfahren nach Anspruch 7, wobei der Wärmetauscher (140), das erste Heizelement (130) und das zweite Heizelement (150) als separate Komponenten vorgesehen sind und wobei das Verfahren die Schritte des Anordnens des Wärmetauschers (140) stromabwärts vom ersten Heizelement (130) und des Anordnens des zweiten Heizelements (150) stromabwärts vom Wärmetauscher (140) aufweist oder
wobei das Verfahren das Bereitstellen des ersten Heizelements (130) und/oder des zweiten Heizelements (150) aufweist, so dass sie in den Wärmetauscher (140) integriert sind.

9. Klimatisierungsverfahren nach Anspruch 7 oder 8, das ferner den Schritt des Bereitstellens einer Fluidverbindung zwischen der mindestens einen Energiequelle (40) und dem Wärmetauscher (140) und vorzugsweise des Bereitstellens eines Wegeventils (50) aufweist, das mit dem Wärmetauscher (140) und der mindestens einen Energiequelle (40) verbunden ist, um steuerbar durch den Wärmetauscher (140) eine Flüssigkeit zu der mindestens einen Energiequelle (40) zu leiten oder um den Wärmetauscher (140) zu umgehen, und wobei das Verfahren ferner besonders bevorzugt einen Schritt des Steuerns der Flüssigkeitsmenge, die durch den Wärmetauscher fließen soll, und der Flüssigkeitsmenge aufweist, die den Wärmetauscher umgehen soll.

10. Klimatisierungsverfahren nach einem der Ansprüche 7 bis 9, wobei während einer ersten Betriebsart das Verfahren den Schritt des Erwärmens der mindestens einen Energiequelle (40) durch Liefern von Wärme vom ersten Heizelement (130) an den Wärmetauscher (140) aufweist.

11. Klimatisierungsverfahren nach einem der Ansprüche 7 bis 10, wobei während einer zweiten Betriebsart, das Verfahren den Schritt des Kühlens der mindestens einen Energiequelle (40) durch Liefern von Kühlluft vom Verdampfer (120) an den Wärmetauscher (140) aufweist.

12. Klimatisierungsverfahren nach einem der Ansprüche 7 bis 11, wobei während einer dritten Betriebsart, das Verfahren den Schritt des Kühlens der mindestens einen Energiequelle (40) und des Innenraums des Fahrzeugs durch Liefern von Kühlluft vom Verdampfer (120) an den Wärmetauscher (140) und den Innenraum des Fahrzeugs aufweist.

13. Klimatisierungsverfahren nach einem der Ansprüche 7 bis 12, wobei während einer vierten Betriebsart das Verfahren die Schritte aufweist:
Erwärmen des Innenraums des Fahrzeugs durch Liefern von Wärme vom zweiten Heizelement (150) an den Innenraum des Fahrzeugs;
Kühlen der mindestens einen Energiequelle (40) durch Liefern von Kühlluft vom Verdampfer (120) an den Wärmetauscher (140); und
Erwärmen des Innenraums des Fahrzeugs durch Liefern von Wärme vom Wärmetauscher (140) an den Innenraum des Fahrzeugs.

14. Klimatisierungsverfahren nach Anspruch 10 oder 11, das ferner den Schritt des Schließens von mindestens einem Auslass (101) zum Innenraum des Fahrzeugs während der ersten Betriebsart und/oder der zweites Betriebsart aufweist, um das Erwärmen bzw. Kühlen des Innenraums zu verhindern.

15. Klimatisierungsverfahren nach Anspruch 12 oder 13, das ferner den Schritt des Öffnens von mindestens einem Auslass (101) zum Innenraum des Fahrzeugs während der dritten Betriebsart und/oder der vierten Betriebsart aufweist, um das Kühlen bzw. Erwärmen des Innenraums zu ermöglichen.

## Revendications

1. Système de climatisation pour la régulation de la température d'au moins une source d'énergie (40) et/ou d'un espace intérieur d'un véhicule, ledit système comprenant :
un ventilateur (110) destiné à générer un flux d'air ;
un évaporateur (120) disposé en aval du ventilateur (110) pour refroidir le flux d'air ;
un premier élément chauffant (130) disposé en aval de l'évaporateur (120) pour chauffer le flux d'air ;
un échangeur de chaleur (140) disposé en aval de l'évaporateur (120) pour échanger de la chaleur avec le flux d'air, et en communication fluidique avec ladite au moins une source d'énergie (40) pour le chauffage ou le refroidissement de ladite au moins une source d'énergie (40) ; **caractérisé en ce que** ledit système comprend
un deuxième élément chauffant (150) disposé en aval de l'évaporateur (120) pour chauffer le flux d'air,
et **en ce que** le système est prévu pour diriger sélectivement le flux d'air chauffé ou refroidi vers l'espace intérieur du véhicule ou empêcher le flux d'air chauffé ou refroidi d'atteindre l'espace intérieur du véhicule.

2. Système de climatisation selon la revendication 1, où l'échangeur de chaleur (140), le premier élément chauffant (130) et le deuxième élément chauffant (150) sont prévus comme composants séparés, et où l'échangeur de chaleur (140) est disposé en aval du premier élément chauffant (130), et le deuxième élément chauffant (150) est disposé en aval de l'échangeur de chaleur (140), ou
où le premier élément chauffant (130) et/ou le deuxième élément chauffant (150) sont intégrés à l'échangeur de chaleur (140).

3. Système de climatisation selon la revendication 1 ou la revendication 2, comprenant en outre une liaison fluidique entre ladite au moins une source d'énergie (40) et l'échangeur de chaleur (140), ladite liaison fluidique comprenant avantageusement un distributeur (50) destiné à guider par commande un liquide vers ladite au moins une source d'énergie (40) par l'échangeur de chaleur (140) ou pour contourner l'échangeur de chaleur (140), et préférentiellement où le distributeur (50) est prévu pour commander une quantité de liquide devant circuler dans l'échangeur de chaleur (140) et une quantité de liquide devant contourner l'échangeur de chaleur (140).

4. Système de climatisation selon l'une des revendications 1 à 3, comprenant en outre au moins une sortie (101) vers l'espace intérieur du véhicule, ladite au moins une sortie (101) étant prévue pour être
dans un état d'ouverture pour le refroidissement ou le chauffage de ladite au moins une source d'énergie (40) et de l'espace intérieur, et
dans un état de fermeture pour le refroidissement ou le chauffage de ladite au moins une source d'énergie (40).

5. Système de climatisation selon l'une des revendications 1 à 4, où ladite au moins une source d'énergie (40) est une batterie destinée à fournir du courant au véhicule.

6. Véhicule, comprenant un système de climatisation selon l'une des revendications 1 à 5, un espace intérieur et au moins une source d'énergie (40).

7. Procédé de climatisation pour la régulation de la température d'au moins une source d'énergie (40) et/ou d'un espace intérieur d'un véhicule, ledit procédé comprenant les étapes suivantes :
préparation d'un ventilateur (110) destiné à générer un flux d'air ;
préparation d'un évaporateur (120) disposé en aval du ventilateur (110) pour refroidir le flux d'air ;
préparation d'un premier élément chauffant (130) disposé en aval de l'évaporateur (120) pour chauffer le flux d'air ;
préparation d'un échangeur de chaleur (140) disposé en aval de l'évaporateur (120) pour échanger de la chaleur avec le flux d'air, et en communication fluidique avec ladite au moins une source d'énergie (40) pour le chauffage ou le refroidissement de ladite au moins une source d'énergie (40) ; **caractérisé par**
la préparation d'un deuxième élément chauffant (150) disposé en aval de l'évaporateur (120) pour chauffer le flux d'air ; et
la direction sélective du flux d'air chauffé ou refroidi vers l'espace intérieur du véhicule ou l'empêchement d'accès à l'espace intérieur du véhicule par le flux d'air chauffé ou refroidi.

8. Procédé de climatisation selon la revendication 7, où l'échangeur de chaleur (140), le premier élément chauffant (130) et le deuxième élément chauffant (150) sont prévus comme composants séparés et où ledit procédé comprend les étapes de disposition de l'échangeur de chaleur (140) en aval du premier élément chauffant (130) et de disposition du deuxième élément chauffant (150) en aval de l'échangeur de chaleur (140), ou
où ledit procédé comprend la préparation du premier élément chauffant (130) et/ou du deuxième élément chauffant (150) pour intégration à l'échangeur de chaleur (140).

9. Procédé de climatisation selon la revendication 7 ou la revendication 8, comprenant en outre l'étape de préparation d'une liaison fluidique entre ladite au moins une source d'énergie (40) et l'échangeur de chaleur (140) et la préparation avantageuse d'un distributeur (50) relié à l'échangeur de chaleur (140) et à ladite au moins une source d'énergie (40) pour guider par commande un liquide vers ladite au moins une source d'énergie (40) par l'échangeur de chaleur (140) ou pour contourner l'échangeur de chaleur (140), et, préférentiellement, où ledit procédé comprend en outre une étape de commande de la quantité de liquide devant circuler dans l'échangeur de chaleur et la quantité de fluide devant contourner l'échangeur de chaleur.

10. Procédé de climatisation selon l'une des revendications 7 à 9, où, pendant un premier mode de fonctionnement, ledit procédé comprend l'étape de chauffage de ladite au moins une source d'énergie (40) par fourniture de chaleur du premier élément chauffant (130) à l'échangeur de chaleur (140).

11. Procédé de climatisation selon l'une des revendications 7 à 10, où, pendant un deuxième mode de fonctionnement, ledit procédé comprend l'étape de refroidissement de ladite au moins une source d'énergie (40) par fourniture d'air froid de l'évaporateur (120) à l'échangeur de chaleur (140).

12. Procédé de climatisation selon l'une des revendications 7 à 11, où, pendant un troisième mode de fonctionnement, ledit procédé comprend l'étape de refroidissement de ladite au moins une source d'énergie (40) et de l'espace intérieur du véhicule par fourniture d'air froid de l'évaporateur (120) à l'échangeur de chaleur (140) et à l'espace intérieur du véhicule.

13. Procédé de climatisation selon l'une des revendications 7 à 12, où, pendant un quatrième mode de fonctionnement, ledit procédé comprend les étapes suivantes :
chauffage de l'espace intérieur du véhicule par fourniture de chaleur du deuxième élément chauffant (150) à l'espace intérieur du véhicule ;
refroidissement de ladite au moins une source d'énergie (40) par fourniture d'air froid de l'évaporateur (120) à l'échangeur de chaleur (140) ; et
chauffage de l'espace intérieur du véhicule par fourniture de chaleur de l'échangeur de chaleur (140) à l'espace intérieur du véhicule.

14. Procédé de climatisation selon la revendication 10 ou la revendication 11, comprenant en outre l'étape de fermeture d'au moins une sortie (101) vers l'espace intérieur du véhicule pendant le premier mode de fonctionnement et/ou le deuxième mode de fonctionnement pour empêcher respectivement le chauffage et le refroidissement de l'espace intérieur.

15. Procédé de climatisation selon la revendication 12 ou la revendication 13, comprenant en outre l'étape d'ouverture d'au moins une sortie (101) vers l'espace intérieur du véhicule pendant le troisième mode de fonctionnement et/ou le quatrième mode de fonctionnement pour permettre respectivement le refroidissement et le chauffage de l'espace intérieur.
